# EUROPÄISCHE PATENTSCHRIFT

(11) **EP 3 340 206 B1**
(45) Veröffentlichungstag und Bekanntmachung des Hinweises auf die Patenterteilung: **20.11.2024**
(21) Anmeldenummer: 17209078.9
(22) Anmeldetag: 20.12.2017
(51) Int. Cl.: G08G 1/16, G10K 1/38, H04R 3/00, H04R 3/12, G06V 20/56, G06V 40/10, G06V 40/20, B60Q 5/00, G10K 11/34

(54) **VORRICHTUNG UND VERFAHREN FÜR EIN FAHRZEUG ZUM BEREITSTELLEN EINER BIDIREKTIONALEN KOMMUNIKATION ZWISCHEN DEM FAHRZEUG UND EINEM PASSANTEN**
DEVICE AND METHOD FOR A VEHICLE FOR PROVIDING BIDIRECTIONAL COMMUNICATION BETWEEN THE VEHICLE AND A PASSER-BY
DISPOSITIF ET PROCÉDÉ POUR UN VÉHICULE PERMETTANT DE FOURNIR UNE COMMUNICATION BIDIRECTIONNELLE ENTRE LE VÉHICULE ET UN PASSANT

(30) Priorität: 20.12.2016 DE 102016125005
(43) Veröffentlichungstag der Anmeldung: 27.06.2018
(73) Patentinhaber: Visteon Global Technologies, Inc., Van Buren Township, MI 48111-5711 (US)
(72) Erfinder: van Laack, Alexander, 52072 Aachen (DE); Wasserfuhr, Peter, 51143 Köln (DE); Torschmied, Axel, 50374 Erftstadt-Dirmerzheim (DE)
(74) Vertreter: MERH-IP Matias Erny Reichl Hoffmann Patentanwälte PartG mbB

(56) Entgegenhaltungen:
- GB-A- 2 507 769
- US-A1- 2013 169 425
- US-A1- 2013 222 127
- US-A1- 2015 329 043
- US-A1- 2016 167 648
- US-B1- 8 676 427

## Beschreibung

Die Erfindung bezieht sich auf eine drahtlose Kommunikation zwischen einem Fahrzeug, insbesondere einem autonomen Fahrzeug, und mindestens einem Passanten in einer Umgebung des Fahrzeugs. Es werden eine Vorrichtung und ein Verfahren zum Bereitstellen einer bidirektionalen Kommunikation zwischen einem Fahrzeug und mindestens einem Passanten vorgeschlagen. Herkömmliche, im Wesentlichen autonom fahrende Fahrzeuge weisen bekanntermaßen eine Vielzahl von Sensoren, wie beispielsweise Abstandssensoren, oder Kameras zur Erfassung der Fahrzeugumgebung, auf. Die sensorische Erfassung der Fahrzeugumgebung dient zum Manövrieren des Fahrzeugs und zum Erkennen von Veränderungen im Verkehrsgeschehen, um beispielsweise auf eine drohende Kollision reagieren zu können. Bekannte Systeme zur Umgebungserfassung verfügen über die Möglichkeit, zwischen statischen und dynamischen Objekten der Fahrzeugumgebung zu unterscheiden, sodass die Bewegung des Fahrzeugs der Fahrzeugumgebung entsprechend angepasst werden kann. Wenn ein Passant, beispielsweise ein Fußgänger, in den Erfassungsbereich der Fahrzeugsensorik gelangt, kann der Passant vom Fahrzeug zwar als ein dynamisches Objekt erkannt werden, jedoch besteht weder für das Fahrzeug noch für den Passanten die Möglichkeit zu erkennen, welche Aktion beziehungsweise Reaktion, wie beispielsweise ein Anhalten oder Wenden, von dem jeweils Anderen als nächstes zu erwarten ist. Dies kann beiderseits eine Missinterpretation für eine nachfolgende Aktion zur Folge haben, wodurch ein flüssiger Bewegungsablauf beiderseits unterbrochen oder eine ungewollte Kollision verursacht wird.

Es wird daher eine Lösung gefordert, die eine Kommunikation zwischen Fahrzeugen, insbesondere autonomen Fahrzeugen, und Passanten ermöglicht, um einen flüssigen Handlungsablauf im Verkehrsgeschehen zu gewährleisten. Dabei soll eine Kommunikation jedoch nur dann mit einem Passanten hergestellt werden, wenn es die Situation erfordert, ohne dass andere Passanten zwingend in die Kommunikation mit einbezogen werden.

Bei einer aus der US 2016/0167648 A1 bekannten Lösung, bei der schwenkbar und drehbar an einem autonomen Fahrzeug angeordnete Lautsprecher eingesetzt werden, können Fahrmanöver des autonom fahrenden Fahrzeugs auf Basis einer erfassten Fahrzeugumgebung angepasst werden, wobei über die schwenkbaren beziehungsweise drehbaren Lautsprecher an Passanten gerichtete Informationen wiedergegeben werden.

Die Ausrichtung der Lautsprecher muss für eine gerichtete Signalwiedergabe, insbesondere beim Vorbeifahren an einem Passanten, durch Schwenken oder Drehen der Lautsprecher angepasst werden. Die Anordnungen schwenkbarer Lautsprecher sind technisch aufwendig, wartungsintensiv und dadurch teuer. Zudem ist lediglich eine direktionale Kommunikation zwischen dem autonomen Fahrzeug und einem Passanten möglich, sodass die Interaktion zwischen dem autonomen Fahrzeug und einem Passanten mit einer auf eine Aktion des Passanten gefolgten Reaktion des autonomen Fahrzeugs, beispielsweise das Einleiten eines Fahrmanövers, abgeschlossen ist.

In der US 2015/329043 A1 wird ein System zum Schutz von Fußgängern beschreiben. Dieses Umfasst eine Vielzahl an Sensoren, wie z.B. Näherungssensoren, LIDAR-Sensoren und Kameras. Die Sensoren überwachen einen Bereich in der Nähe des Fahrzeugs und das System bestimmt, wenn ein von einem Sensor detektiertes Objekt ein Fußgänger ist. Wenn das Objekt ein Fußgänger ist, kann das System akustische Warnungen und/oder eine visuelle Warnung in Richtung des Fußgängers senden. Das System gibt eine zweite Warnung aus, wenn der Fußgänger dem Fahrzeug näherkommt.

Die GB 2507769 A und US 2016/167648 A1 offenbaren ein Straßenfahrzeugsystem, das eine Reihe von Mikrofonen und Lautsprechern umfasst und so eine bidirektionale Kommunikation zwischen dem Fahrzeug und einem Fußgänger ermöglicht.

Die Aufgabe der Erfindung besteht nunmehr darin, eine wartungsarme Vorrichtung sowie ein Verfahren für ein Fahrzeug, insbesondere ein autonomes Fahrzeug, vorzuschlagen, mit der/dem eine auf einen Passanten gerichtete bidirektionale Kommunikation zwischen dem Fahrzeug und dem Passanten bereitgestellt werden kann.

Die Aufgabe wird durch eine Vorrichtung mit den Merkmalen des Patentanspruchs 1 und einem Verfahren mit den Merkmalen des Patentanspruchs 8 gelöst. Vorteilhafte Ausgestaltungen oder Weiterbildungen sind in den jeweils abhängigen Patentansprüchen angegeben.

Eine beispielhafte Vorrichtung für ein Fahrzeug, insbesondere ein autonomes Fahrzeug, zum Bereitstellen einer bidirektionalen Kommunikation zwischen dem Fahrzeug und mindestens einem Passanten weist eine sensorische Einrichtung zum Erfassen von Passanten in einer Umgebung des Fahrzeugs und ein an dem Fahrzeug angeordnetes, mit mehreren Lautsprechern und mehreren Mikrofonen gebildetes Array zur Bereitstellung einer in einem vorgegebenen Bereich um die Position eines erfassten Passanten fokussierten akustischen Strahlformung zum Übertragen von akustischen Signalen, das heißt zum Senden von akustischen Signalen an den Passanten und zum Empfangen von akustischen Signalen von dem Passanten, auf.Weiter, weist die Vorrichtung eine mit der sensorischen Einrichtung zum Erfassen von Passanten und dem mit mehreren Lautsprechern und mehreren Mikrofonen gebildeten Array gekoppelte computerbasierte Erkennungseinrichtung zum Erkennen von Passantengesten und/oder akustischen Informationen des Passanten auf, wobei die computerbasierte Erkennungseinrichtung ferner eingerichtet ist, auf Basis einer erkannten Passantengeste und/oder eines erkannten akustischen Signals des Passanten eine Aktion des Fahrzeugs auszuführen, wobei die Aktion des Fahrzeugs zumindest eine Wiedergabe eines akustischen Signals an den Passanten und/oder ein Empfangen eines visuellen und/oder akustischen Signals von dem Passanten umfasst.

Unter mehreren Lautsprechern und mehreren Mikrofonen, die ein an dem Fahrzeug angeordnetes Array bilden, sind jeweils mindestens zwei, vorzugsweise jeweils mindestens drei Lautsprecher beziehungsweise Mikrofone zu verstehen.

Unter dem Begriff autonomes Fahrzeug ist ein selbstfahrendes computergesteuertes Fahrzeug beziehungsweise ein in einem autonomen Betriebsmodus fahrendes Fahrzeug mit oder ohne Insassen zu verstehen.

Nach einer Weiterbildung der Vorrichtung ist die sensorische Einrichtung zum Erfassen von Passanten vorgesehen, um Positionsdaten identifizierter Passanten in Bezug zur Position des Fahrzeugs zu bestimmen. Hierzu kann die sensorische Einrichtung zum Erfassen von Passanten eine Recheneinheit aufweisen. Auf Basis der von der sensorischen Einrichtung bestimmten Passantenpositionsdaten eines identifizierten Passanten ist es möglich, eine akustische Strahlformung zum Übertragen von akustischen Signalen um einen Bereich der Position des Passanten zu fokussieren.

Unter der akustischen Strahlformung (englisch Beamforming) ist eine softwaregesteuerte Signalverarbeitungstechnik zu verstehen, bei der das mit mehreren Lautsprechern und mehreren Mikrofonen gebildete Array zur gerichteten Signalübertragung oder zum Empfangen von akustischen Signalen aus einer bestimmten Richtung eingesetzt wird. Dies wird erreicht, indem die Lautsprecher beziehungsweise die Mikrofone in einer phasengesteuerten Anordnung derart kombiniert werden, dass akustische Signale unter bestimmten Winkeln eine konstruktive Interferenz erfahren, während andere eine zerstörende Interferenz erfahren. Die akustische Strahlformung kann am Sendeende und am Empfangsende verwendet werden, um eine räumliche Selektivität zu erreichen. Zweckmäßigerweise kann das Array eine eigene Recheneinheit mit einer Software zum. Erzeugen einer akustischen Strahlformung und zur Ansteuerung der Mikrofone und Lautsprecher aufweisen oder das Array ist mit einer entsprechenden Recheneinheit gekoppelt. Mit der softwaregestützten akustischen Strahlformung zur gerichteten Wiedergabe von akustischen Signalen und dem Empfangen von akustischen Signalen aus einem fokussierten Bereich ermöglicht die Vorrichtung eine gerichtete bidirektionale Kommunikation mit einem ausgewählten Passanten, ohne dass weitere, von der Kommunikation nicht betroffene Passanten in diese Kommunikation einbezogen werden.

Zum Erfassen der Fahrzeugumgebung kann die sensorische Einrichtung mindestens eine Kamera aufweisen, wobei es sich vorzugsweise um eine 360° Kamera handeln kann. Die sensorische Einrichtung umfasst vorteilhaft mindestens zwei, vorzugsweise mindestens drei beziehungsweise mehrere an dem Fahrzeug angeordnete Kameras. Weiterhin kann es vorgesehen sein, dass zur Umgebungserfassung zusätzlich weitere Sensoren, wie beispielsweise ultraschallbasierte Abstandssensoren, eingesetzt werden. Mit Hilfe einer Software der Recheneinheit oder der computerbasierten Erkennungseinrichtung können Kamerabilder und Sensordaten der Fahrzeugumgebung interpretiert und ausgewertet werden. So ist es beispielsweise möglich, dass zusätzlich zur Erfassung von Passantenpositionsdaten weitere Positionsdaten von mittelbaren Gefahrenquellen erfasst werden, um basierend auf diesen Daten mit einem betreffenden Passanten gerichtet in Kontakt treten zu können. Mittelbare Gefahrenquellen können beispielsweise eine Wasseransammlung auf der Straße, ein Tier oder herabfallende Gegenstände sein. Weiterhin kann die sensorische Einrichtung eingerichtet sein, um Positionsdaten eines Passanten oder einer Gruppe von Passanten in Bezug auf das Fahrzeug zu bestimmen. Dabei kann eine softwaregestützte Zielerfassung von Passanten auf Basis von Kamerabildern der mindestens einen Kamera vorgesehen sein.

Die computerbasierte Erkennungseinrichtung ist vorteilhaft für einen Eingriff in die Steuerungselektronik des Fahrzeugs vorgesehen, um Aktionen des Fahrzeugs auszuführen. Da die Aktionen des Fahrzeugs von der computerbasierten Erkennungseinrichtung gesteuert werden, liefert die sensorische Erfassungseinrichtung zum Erfassen der Fahrzeugumgebung Daten der Fahrzeugumgebung sowie Passantenpositionsdaten an die computerbasierte Erkennungseinrichtung. Die an die computerbasierte Erkennungseinrichtung bereitgestellten Daten werden ausgewertet und interpretiert und gegebenenfalls einem Steuerungsbefehl zugeordnet, der eine Aktion des Fahrzeugs auslöst. Wenn eine Kommunikation mit einem Passanten erforderlich ist, werden zur Generierung einer um die Position des Passanten fokussierten akustischen Strahlformung Daten an das Array übertragen.

Da sich ein Fahrzeug, insbesondere ein fahrendes autonomes Fahrzeug, und der mindestens eine Passant relativ zueinander bewegen können, ist es vorteilhaft, dass die akustische Strahlformung auf Basis von erfassten Positionsdaten des Passanten dynamisch fokussierbar ist. Erfindungsgemäß wird durchgeführt eine Anpassung des Fokusbereichs um die Position des ausgewählten Passanten unter Berücksichtigung der Geschwindigkeit des Fahrzeugs und der Bewegungsgeschwindigkeit des Passanten.

Nach einer bevorzugten Ausgestaltung der Vorrichtung ist das mit mehreren Lautsprechern und Mikrofonen gebildete Array zumindest im Frontbereich des Fahrzeugs angeordnet. Dabei können die mehreren Lautsprecher und die mehreren Mikrofone abwechselnd nebeneinander angeordnet sein. Eine quasi zufällige Anordnung der mehreren Lautsprecher und der mehreren Mikrofone über der gesamten Fahrzeugoberfläche erweist sich als vorteilhaft, da dadurch eine optimale Fokussierung einer akustischen Strahlformung in jede Richtung der Fahrzeugumgebung gewährleistet werden kann. Weiterhin kann das mit mehreren Lautsprechern und Mikrofonen gebildete Array zum Ausblenden von Umgebungsgeräuschen außerhalb eines um die Position des Passanten fokussierten Bereichs der akustischen Strahlformung eingerichtet sein, um Passanten, die von der Kommunikation mit dem Fahrzeug nicht betroffen sind, von der Kommunikation auszuschließen. Ein Ausblenden von Umgebungsgeräuschen kann mit digitalen Filtern erreicht werden, die Bestandteil der Software zum Erzeugen der akustischen Strahlformung sind.

Grundsätzlich ist unter der mit der Vorrichtung bereitgestellten bidirektionalen Kommunikation ein Austausch von in gesprochener Sprache wiedergegebenen Informationen zu verstehen. Zweckmäßigerweise umfasst die Vorrichtung einen Sprachgenerator zur Wiedergabe von akustischen Signalen über die Lautsprecher des Arrays in Form von gesprochener Sprache. Dabei können die in gesprochener Sprache vom Fahrzeug über die Lautsprecher des Arrays wiedergegebenen akustischen Signale in Kombination mit visuellen Signalen des Fahrzeugs wiedergegeben werden. Für die Wiedergabe von visuellen Signalen kann eine vorhandene Lichtinstallation des Fahrzeugs eingesetzt werden. Es besteht jedoch auch die Möglichkeit, an dem Fahrzeug zusätzliche Lichtinstallationen zur Wiedergabe von visuellen Signalen vorzusehen.

Gemäß einer vorteilhaften Weiterbildung der Vorrichtung weist die auf Basis einer erkannten Passantengeste und/oder eines erkannten akustischen Signals des Passanten ausgelöste beziehungsweise ausgeführte Aktion des Fahrzeugs zusätzlich eine weitere Aktion auf, wobei die weitere Aktion ausgewählt ist aus einer Gruppe von Aktionen, die eine Benachrichtigung eines Insassen des Fahrzeugs, ein Anhalten des Fahrzeugs, ein Bremsen des Fahrzeugs, ein Beschleunigen des Fahrzeugs, ein Ausweichmanöver des Fahrzeugs, ein Verlassen eines autonomen Betriebsmodus des Fahrzeugs und ein Abschalten des Fahrzeugs umfasst.

Die Aufgabe wird auch durch ein Verfahren für Fahrzeuge, insbesondere autonome Fahrzeuge, zum Bereitstellen einer bidirektionalen Kommunikation zwischen einem Fahrzeug und mindestens einem Passanten gemäß der unabhängigen Patentansprüche 1 und 8 gelöst.

Bei einem beispielhaften Verfahren wird die Fahrzeugumgebung des Fahrzeugs sensorisch erfasst und beim Erfassen eines Passanten in einer vorgegebenen Entfernung zum Fahrzeug eine vom Fahrzeug ausgehende akustische Strahlformung zum Senden von akustischen Signalen an den Passanten und zum Empfangen von akustischen Signalen von dem Passanten in einem vorgegebenen Bereich um die Position des Passanten fokussiert und beim Erkennen einer Geste und/oder eines akustischen Signals des Passanten eine Aktion des Fahrzeugs ausgelöst, wobei die Aktion des Fahrzeugs zumindest eine Wiedergabe eines akustischen Signals an den Passanten und/oder ein Empfangen eines visuellen und/oder akustischen Signals von dem Passanten umfasst.

Das beispielhafte Verfahren ist vorzugsweise mit einer wie vorstehend beschriebenen Vorrichtung anzuwenden.

Gemäß einer vorteilhaften Ausgestaltung des Verfahrens kann die Position eines Passanten bestimmt werden, indem Kamerabilder der Fahrzeugumgebung mit einer Software interpretiert und ausgewertet werden. Dabei ist die Software dazu eingerichtet, Positionsdaten von Passanten in Bezug zur Position des Fahrzeugs zu bestimmen. Es wird vorzugsweise eine Software eingesetzt, die eine dynamische Zielerfassung von Passanten, die sich in einer vorgegebenen Entfernung zum Fahrzeug befinden, ermöglicht.

Die bestimmten Passantenpositionsdaten werden eingesetzt, um die akustische Strahlformung in einem Bereich um die Position des Passanten zu fokussieren. Der Fokusbereich der akustischen Strahlformung kann dabei so gewählt werden, dass nur der betreffende Passant ein akustisches Signal des Fahrzeugs wahrnehmen kann. Gleichermaßen kann der Fokusbereich der akustischen Strahlformung um die Position des Passanten so eingestellt sein, dass fahrzeugseitig nur die akustischen Signale des Passanten empfangen werden können. Es kann jedoch vorgesehen sein, dass eine Kommunikation zwischen einer Gruppe von Passanten und dem Fahrzeug erforderlich ist. In diesem Fall kann der Fokusbereich entsprechend einer flächigen oder räumlichen Ausdehnung einer Passantengruppe oder aufgrund einer bestimmten Passantenanzahl einer Passantengruppe angepasst werden.

Zum Ausblenden von Umgebungsinformationen eines um die Position des Passanten oder einer Passantengruppe fokussierten Bereichs der akustischen Strahlformung können digitale Filter eingesetzt werden, die Bestandteil der Software zum Erzeugen der akustischen Strahlformung sind. Durch das Ausblenden von Umgebungsgeräuschen wird sichergestellt, dass fahrzeugseitig nur die von dem identifizierten beziehungsweise fokussierten Passanten übermittelten Signale ausgewertet und interpretiert werden. Weiterhin hat die Fokussierung der akustischen Strahlformung den Vorteil, dass nicht betroffene Passanten nicht in die Kommunikation einbezogen werden, da die weiteren Passanten, die sich außerhalb des Fokusbereichs der akustischen Strahlformung befinden, akustische Signale des Fahrzeugs nicht wahrnehmen können.

In diesem Sinne ist unter einem akustischen Signal vor allem eine in gesprochener Sprache wiedergegebene Information zu verstehen. Bei den vom Fahrzeug, insbesondere vom autonomen Fahrzeug, wiedergegebenen akustischen Signalen handelt es sich daher vorzugsweise um in gesprochener Sprache wiedergegebene Informationen. Dabei können akustische Signale in verschiedenen Landessprachen wiedergegeben werden.

Das Verfahren ermöglicht eine bidirektionale Kommunikation zwischen einem Fahrzeug und mindestens einem Passanten durch einen Austausch von akustischen Signalen in Form von gesprochener Sprache, wobei visuelle Signale des Fahrzeugs und Gesten des Passanten bei der bidirektionalen Kommunikation einbezogen werden können.

Es kann vorgesehen sein, dass mehrere Passanten unabhängig voneinander oder in unterschiedlichen Entfernungen zum Fahrzeug in eine bidirektionale Kommunikation mit dem Fahrzeug einbezogen werden müssen. In diesem Fall werden mehrere Fokusbereiche der akustischen Strahlformung entsprechend der Anzahl der Passanten generiert. Beispielsweise kann es vorgesehen sein, dass eine akustische Strahlformung zu jeder Außenseite des Fahrzeugs, das heißt nach vorn, nach hinten sowie nach rechts und nach links generiert wird.

Eine andere Möglichkeit zum Einbeziehen von weiteren Passanten besteht darin, dass der Fokusbereich einer akustischen Strahlformung vergrößert wird.

Vorteilhafterweise wird die akustische Strahlformung zur Übertragung akustischer Signale in einem vorgegebenen Bereich um die Position des Passanten auf Basis von erfassten Positionsdaten des Passanten dynamisch fokussiert. Dadurch ist es möglich, Entfernungsänderungen, die durch eine Relativbewegung zwischen einem Passanten und dem Fahrzeug hervorgerufen werden, dynamisch auszugleichen, sodass stets eine für die bidirektionale Kommunikation optimale akustische Strahlformung gewährleistet werden kann.

Gemäß einer vorteilhaften Ausgestaltung des Verfahrens kann es vorgesehen sein, dass während und/oder nach einer Aktion des Fahrzeugs ein akustisches Signal des Passanten und/oder eine Geste des Passanten erfasst wird/werden. Eine Erfassung von akustischen Signalen und/oder Gesten des Passanten während und/oder nach der Aktion des Fahrzeugs hat den Vorteil, dass die auf eine Aktion des Fahrzeugs unmittelbar bei dem Passanten ausgelöste Reaktion erfasst und interpretiert werden kann. Dadurch ist es möglich, dass eine Aktion, die seitens des Fahrzeugs aufgrund einer Fehlinterpretation einer Geste oder eines akustischen Signals des Passanten ausgelöst und ausgeführt wird/wurde oder zu einer Gefahrensituation führt, abgebrochen werden kann. Auf diese Weise können durch Kommunikationsfehler oder durch Fehlinterpretationen von akustischen Signalen oder Gesten ungewollt ausgelöste beziehungsweise ausgeführte Aktionen des Fahrzeugs vermieden und/oder korrigiert werden. Bei einer Interpretation von akustischen Signalen kann beispielsweise die Tonlage, insbesondere die Tonhöhe und Lautstärke, eines akustischen Signals berücksichtigt werden. Alternativ oder zusätzlich können auch Gesten, insbesondere eine Bewegungsgeschwindigkeit von Gesten, berücksichtigt werden, um eine bestimmte Zuordnung zu einer Aktion des Fahrzeugs zu erreichen.

Gemäß einer bevorzugten Weiterbildung des Verfahrens kann es vorgesehen sein, dass beim Erkennen einer Geste und/oder eines akustischen Signals des Passanten zusätzlich eine weitere Aktion des Fahrzeugs, insbesondere des autonomen Fahrzeugs, ausgelöst oder ausgeführt wird, wobei die weitere Aktion ausgewählt ist aus einer Gruppe von Aktionen, die eine Benachrichtigung eines Insassen des Fahrzeugs, ein Anhalten des Fahrzeugs, ein Bremsen des Fahrzeugs, ein Beschleunigen des Fahrzeugs, ein Ausweichmanöver des Fahrzeugs, ein Verlassen eines autonomen Betriebsmodus des Fahrzeugs und ein Abschalten des Fahrzeugs umfasst. Durch das Auslösen beziehungsweise Ausführen einer weiteren Aktion ist es möglich, zusätzlich zu der akustischen und/oder visuellen Aktion des Fahrzeugs gleichzeitig eine weitere Aktion auszuführen, die der tatsächlich durch den fokussierten Passanten artikulierten Handlung entspricht. So wird beispielsweise durch ein von einem fokussierten Passanten artikuliertes Stop mit einem akustischen und/oder optischen Signal als Aktion des Fahrzeugs in Richtung des fokussierten Passanten reagiert und das Fahrzeug zeitgleich als weitere Aktion gestoppt. Wenn die Software anhand des akustischen Signals und/oder der Gesten eines fokussierten Passanten eine Gefahrensituation interpretiert, kann es weiterhin vorgesehen sein, dass der autonome Betriebsmodus des Fahrzeugs verlassen wird und/oder ein Insasse des Fahrzeugs informiert wird.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine schematische Darstellung eines Ausführungsbeispiels der Vorrichtung für ein Fahrzeug, insbesondere ein autonomes Fahrzeug, und
- Fig. 2:: ein Ablaufdiagramm zur Erläuterung eines Ausführungsbeispiels des Verfahrens für ein Fahrzeug, insbesondere ein autonomes Fahrzeug, zur Bereitstellung einer bidirektionalen Kommunikation zwischen dem Fahrzeug und einem Passanten.

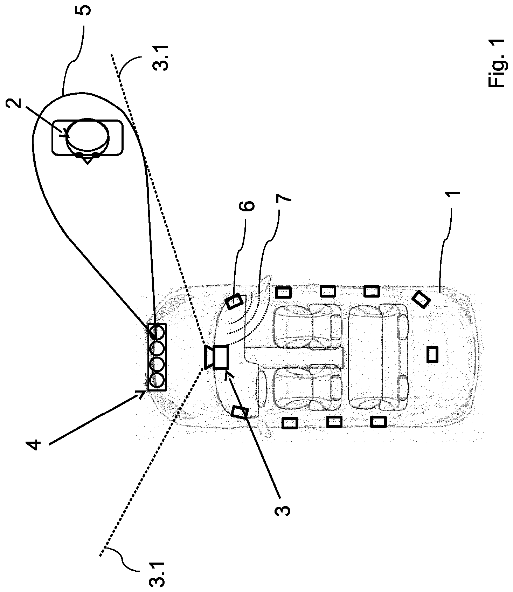

Fig. 1 zeigt eine schematische Darstellung eines Ausführungsbeispiels der Vorrichtung für ein Fahrzeug 1, insbesondere ein autonomes Fahrzeug 1, zum Bereitstellen einer bidirektionalen Kommunikation zwischen dem Fahrzeug 1 und einem Passanten 2. Die Vorrichtung weist eine sensorische Einrichtung 3 zum Erfassen von Passanten 2 in einer vorgegebenen Umgebung des Fahrzeugs 1 auf. Bei der sensorischen Einrichtung 3 handelt es sich um eine Kamera 3, die im gezeigten Ausführungsbeispiel im Frontbereich des Fahrzeugs 1 angeordnet ist. Mit den gestrichelt gekennzeichneten Linien ist der Sichtbereich 3.1 beziehungsweise der Sichtwinkel der Kamera 3 dargestellt. Innerhalb des von den gestrichelten Linien aufgespannten Sichtbereichs 3.1 der Kamera 3 befindet sich der Passant 2, sodass die Kamera 3 den Passanten 2 erfassen kann. Mittels einer Rechnereinheit, die zur Auswertung und Interpretation von Kamerabildern der Kamera 3 eingerichtet ist und ein Bestandteil der sensorischen Einrichtung 3 sein kann, sind Positionsdaten des Passanten 2 in Bezug zum Fahrzeug 1 bestimmbar. Für das Erkennen und Interpretieren von Kamerabildern der Fahrzeugumgebung kann die Rechnereinheit mit einer entsprechenden Software ausgestattet sein.

Weiterhin umfasst die Vorrichtung ein mit mehreren Lautsprechern und Mikrofonen gebildetes Array 4 zur Bereitstellung einer in einem vorgegebenen Bereich um die Position des erfassten Passanten 2 fokussierten akustischen Strahlformung 5, die in Fig. 1 mit einer von dem Array 4 ausgehenden und den Passanten 2 umgebenden tropfenförmigen Blase dargestellt ist. Im gezeigten Beispiel ist das mit mehreren Lautsprechern und Mikrofonen gebildete Array 4 in einem Frontbereich des Fahrzeugs 1 angeordnet. Gemäß einer vorteilhaften, nicht gezeigten Ausführungsform ist das Array über die gesamte Fahrzeugoberfläche angeordnet, wobei die mehreren Mikrofone und die mehreren Lautsprecher in einer regelmäßigen Anordnung oder in einer quasizufälligen Anordnung über die gesamte Fahrzeugkonstruktion des Fahrzeugs 1 verteilt sind.

Die Fokussierung der akustischen Strahlformung 5 in einem Bereich um den Passanten 2 basiert auf den von der sensorischen Einrichtung 3 bestimmten Passantenpositionsdaten und dient zum Senden akustischer Signale an den Passanten 2 und zum Empfangen von akustischen Signalen von dem Passanten 2.

Weiterhin umfasst die Vorrichtung eine mit der sensorischen Einrichtung 3 und dem mit mehreren Lautsprechern und Mikrofonen gebildeten Array 4 gekoppelte, computerbasierte, nicht dargestellte Erkennungseinrichtung zum Erkennen von Passantengesten und/oder akustischen Informationen des Passanten 2. Die computerbasierte Erkennungseinrichtung ist ferner eingerichtet, auf Basis einer erkannten Passantengeste und/oder eines erkannten akustischen Signals des Passanten 2 eine Aktion des Fahrzeugs 1 auszuführen, wobei die Aktion des Fahrzeugs 1 zumindest eine Wiedergabe eines akustischen Signals an den Passanten 2 und/oder ein Empfangen eines visuellen und/oder akustischen Signals von dem Passanten 2 umfasst.

Die Vorrichtung ist gemäß einer Weiterbildung derart ausgebildet, zu einer auf Basis einer erkannten Passantengeste und/oder eines erkannten akustischen Signals des Passanten 2 ausgelösten Aktion zusätzlich eine weitere Aktion auszuführen, wobei die weitere Aktion ausgewählt ist aus einer Gruppe von Aktionen, die eine Benachrichtigung eines Insassen des Fahrzeugs 1, ein Anhalten des Fahrzeugs 1, ein Bremsen des Fahrzeugs 1, ein Beschleunigen des Fahrzeugs 1, ein Ausweichmanöver des Fahrzeugs 1, ein Verlassen eines autonomen Betriebsmodus des Fahrzeugs 1 und ein Abschalten des Fahrzeugs 1 umfasst. Eine solche weitere Aktion des Fahrzeugs 1, insbesondere des autonomen Fahrzeugs 1, bei der eine Benachrichtigung eines Fahrzeuginsassen erfolgt, ist im Ausführungsbeispiel der Fig. 1 gezeigt.

In den Fahrzeuginnenraum des Fahrzeugs 1 wiedergegebene akustische Signale eines mit einem in dem Fahrzeuginnenraum angeordneten Lautsprechers 6 sind anhand von gestrichelten Linien dargestellt. Dabei kann es vorgesehen sein, dass die akustischen Signale 7 als tatsächlich von dem Passanten 2 ausgehende akustische Signale in den Fahrzeuginnenraum des Fahrzeugs 1 wiedergegeben werden. Dadurch ist es möglich, nicht dargestellte Fahrzeuginsassen auf eine Situation außerhalb des Fahrzeuginnenraums aufmerksam zu machen und/oder eine Kommunikation zwischen Fahrzeuginsassen und dem Passanten 2 herzustellen. Aufgrund der mit dem Array 4 bereitgestellten akustischen Strahlformung 5 um die Position des Passanten 2 werden Umgebungsgeräusche außerhalb des fokussierten Bereichs der akustischen Strahlformung 5 ausgeblendet, sodass eine störungsfreie Kommunikation gewährleistet werden kann. Dabei verhindert die akustische Signalwiedergabe in Richtung des Passanten 2 innerhalb der akustischen Strahlformung 5, dass Passanten außerhalb der akustischen Strahlformung 5 in die Kommunikation einbezogen werden.

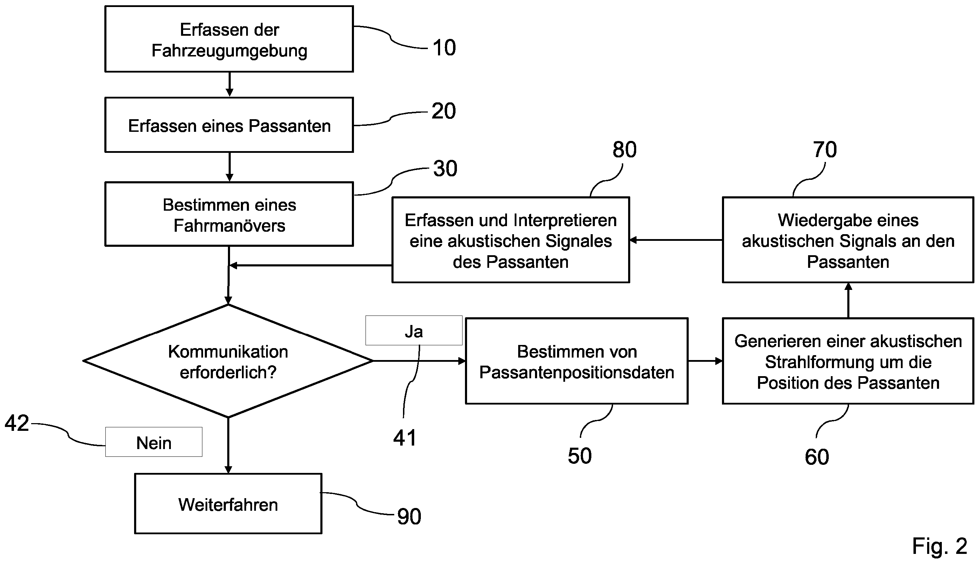

Fig. 2 zeigt ein Ablaufdiagramm zur Erläuterung des Verfahrens für ein Fahrzeug 1, insbesondere ein autonomes Fahrzeug 1, zur Bereitstellung einer bidirektionalen Kommunikation zwischen dem Fahrzeug 1 und einem Passanten 2. Das Verfahren ist vorzugsweise mit einer wie in Fig. 1 gezeigten Vorrichtung beziehungsweise einer Ausführungsform der in Fig. 1 gezeigten Vorrichtung anzuwenden. Zur Erläuterung der Fig. 2 wird daher auf die in Fig. 1 gezeigte Vorrichtung Bezug genommen.

Zunächst ist davon auszugehen, dass sich das Fahrzeug 1 in einem autonomen Betriebsmodus befindet und selbstständig fortbewegen kann. Das bedeutet, dass sich das Fahrzeug 1 ohne ein unmittelbares Eingreifen menschlicher Handlung fortbewegt. Bei dem Verfahren zur Bereitstellung einer bidirektionalen Kommunikation zwischen dem Fahrzeug 1 und einem Passanten 2 wird derart vorgegangen, dass zunächst die Fahrzeugumgebung eines Fahrzeugs 1 sensorisch erfasst wird, wie mit dem Verfahrensschritt 10 gekennzeichnet ist. Wenn beim Erfassen der Fahrzeugumgebung ein Passant 2 identifiziert wird, wie es im Ablaufdiagramm mit dem Bezugszeichen 20 gekennzeichnet ist, wird gemäß dem nachfolgenden Verfahrensschritt 30 abgeschätzt, ob aufgrund der Entfernung und/oder der Bewegungsgeschwindigkeit und/oder der Bewegungsrichtung des Passanten 2 und unter Berücksichtigung der Eigenbewegung des Fahrzeugs 1 ein geändertes Fortbewegungsmanöver des Fahrzeugs 1 erforderlich ist. Grundsätzlich ist davon auszugehen, dass eine Anpassung der Fortbewegung des Fahrzeugs 1 erforderlich ist, wenn sich ein identifizierter Passant 2 bereits in einer geringen Entfernung zum Fahrzeug 1 befindet. Es kann daher vorgesehen sein, dass in einem vorgegebenen Radius um das Fahrzeug 1 ein Sicherheitsbereich festgelegt wird, in dem beim Identifizieren eines Passanten 2 unmittelbar eine Änderung der Fortbewegung des Fahrzeugs 1 ausgelöst wird. Wenn sich ein identifizierter Passant 2 in einer Entfernung zum Fahrzeug 1 befindet, die eine Kommunikation erforderlich macht, erfolgt eine Entscheidung 41 zum Aufbau einer Kommunikation mit dem identifizierten Passanten 2. Weiterhin kann es gemäß einer in dem Ablaufdiagramm nicht berücksichtigen alternativen Ausführungsvariante des Verfahrens vorgesehen sein, dass die Entscheidung über die Bereitstellung einer Kommunikation mit einem identifizierten Passanten 2 aufgrund einer Geste und/oder eines akustischen Signals des identifizierten Passanten 2 getroffen wird. Dabei können Gesten sensorisch beziehungsweise mit einer Kamera und/oder akustische Signale mit Mikrofonen erfasst und mittels einer Software ausgewertet und interpretiert werden.

Als nächster Verfahrensschritt ist eine Bestimmung von konkreten Positionsdaten des Passanten 2 auf der Basis von Sensordaten und/oder Kamerabildern vorgesehen, wie im Verlaufsdiagramm mit dem Bezugszeichen 50 gekennzeichnet ist. Dabei kann eine softwaregestützte Zielerfassung eingesetzt werden. Die bestimmten Passantenpositionsdaten werden im nachfolgenden Schritt 60 eingesetzt, um eine vom Fahrzeug 1 ausgehende akustische Strahlformung 5 zum Senden akustischer Signale an den Passanten 2 und zum Empfangen akustischer Signale von dem Passanten 2 in einem vorgegebenen Bereich um die Position des Passanten 2 zu fokussieren. Der Fokusbereich der akustischen Strahlformung 5 wird dabei so gewählt, dass vom Fahrzeug 1 ausgesandte akustische Signale nur von dem betreffenden Passanten 2 wahrgenommen werden, ohne dass weitere Passanten, die sich außerhalb des Fokusbereichs der akustischen Stahlformung 5 befinden, die vom Fahrzeug 1 ausgesandten akustischen Signale wahrnehmen können.

Nach Wiedergabe eines an den Passanten 2 gerichteten akustischen Signals 70 wird eine Aktion 80 des Fahrzeugs 1 ausgelöst, wobei es sich im gezeigten Ausführungsbeispiel um das Empfangen eines akustischen Signals von dem Passanten 2 als Reaktion auf das vom Fahrzeug 1 ausgesendete Signal 70 handelt. Erfordert das akustische Signal des Passanten 2 keine weitere Kommunikation mit dem Fahrzeug 1, wird mit der Entscheidung 42 fortgefahren, die eine weitere Aktion 90 des Fahrzeugs 1 auslöst, wobei es sich bei der weiteren Aktion im vorliegenden Beispiel um ein Weiterfahren des Fahrzeugs 1 handelt. Dabei kann die bidirektionale Kommunikation aufrecht erhalten werden, bis der Passant 2 einen Sicherheitsbereich des Fahrzeugs 1 verlassen hat beziehungsweise einen vorgegebenen Abstand zum Fahrzeug 1 erreicht hat. Alternativ wird die bidirektionale Kommunikation nach einer vorgegebenen Zeitdauer unterbrochen, sofern während dieser Zeitdauer keine das Fahrzeug 1 betreffenden akustischen Signale empfangen werden.

Weiterhin kann es vorgesehen sein, dass aufgrund einer Geste und/oder eines akustischen Signals des Passanten 2, die/das entsprechend dem Verfahrensschritt 80 vom Fahrzeug 1 erfasst werden kann/können, zusätzlich eine weitere Aktion des Fahrzeugs 1 ausgelöst wird, wobei die weitere Aktion ausgewählt ist aus einer Gruppe von Aktionen die, eine Benachrichtigung eines Insassen des Fahrzeugs 1, ein Anhalten des Fahrzeugs 1, ein Bremsen des Fahrzeugs 1, ein Beschleunigen des Fahrzeugs 1, ein Ausweichmanöver des Fahrzeugs 1, ein Verlassen eines autonomen Betriebsmodus des Fahrzeugs 1 und ein Abschalten des Fahrzeugs 1 umfasst.

Sofern bei der Interpretation oder beim Erkennen einer verbalen Reaktion eines Passanten 2 festgestellt wird, dass eine weitere Kommunikation mit dem Passanten 2 erforderlich ist, wird die bidirektionale Kommunikation zwischen dem Fahrzeug 1 und dem Passanten 2 aufrecht erhalten. Dabei kann es vorgesehen sein, dass der Fokusbereich der akustischen Strahlformung 5 um die Position des Passanten 2 dynamisch angepasst wird, wenn sich das Fahrzeug 1 und der Passant 2 relativ zueinander bewegen. Für die dynamische Anpassung des Fokusbereichs der akustischen Strahlformung 5 kann eine Zielerfassung zum Bestimmen der Passantenpositionsdaten eingesetzt werden.

### Bezugszeichenliste

- 1: Fahrzeug
- 2: Passant
- 3: sensorische Einrichtung, Kamera
- 3.1: Sichtbereich Kamera 3
- 4: Array
- 5: akustische Strahlformung
- 6: Lautsprecher
- 7: akustische Signale
- 10: Erfassen der Fahrzeugumgebung
- 20: Erfassen eines Passanten
- 30: Bestimmen eines Fahrmanövers
- 41: Kommunikation erforderlich ja
- 42: Kommunikation erforderlich nein
- 50: Bestimmen von Passantenpositionsdaten
- 60: Generieren einer akustischen Strahlformung
- 70: Wiedergabe eines akustischen Signals
- 80: Aktion, Erfassen und Interpretieren eines akustischen Signals
- 90: weitere Aktion, Weiterfahren

## Patentansprüche

1. Vorrichtung für ein Fahrzeug (1), insbesondere ein autonomes Fahrzeug (1), zum Bereitstellen einer bidirektionalen Kommunikation zwischen dem Fahrzeug (1) und mindestens einem Passanten (2) umfassend:
eine sensorischen Einrichtung (3) zum Erfassen von Passanten (2) in einer Umgebung des Fahrzeugs (1)
ein Array (4) angeordnet am Fahrzeug (1) und bestehend aus mehreren Lautsprechern und mehreren Mikrofonen zum Bereitstellen einer in einem vorgegebenen Bereich um die Position eines erfassten Passanten (2) fokussierten akustischen Strahlformung (5) zum Senden von akustischen Signalen an den Passanten (2) und zum Empfangen von akustischen Signalen von dem Passanten (2); und
eine computerbasierte Erkennungseinrichtung zum Erkennen und Interpretieren von Passantengesten und/oder akustischen Signalen des Passanten (2), wobei:
die Interpretation eine Zuordnung der erkannten Gesten und/oder der erkannten akustischen Signalen des Passanten (2) zu einer bestimmten Aktion des Fahrzeugs umfasst;
die computerbasierte Erkennungseinrichtung mit der sensorischen Einrichtung (3) und dem Array (4) gekoppelt ist;
die computerbasierte Erkennungseinrichtung ferner ausgebildet ist, auf Basis einer erkannten Passantengeste und/oder eines erkannten akustischen Signals des Passanten (2) und deren Interpretation eine Aktion des Fahrzeugs (1) auszuführen,
die Aktion des Fahrzeugs (1) zumindest eine Wiedergabe eines akustischen Signals an den Passanten (2) und/oder ein Empfangen eines visuellen und/oder akustischen Signals von dem Passanten (2) umfasst,
**dadurch gekennzeichnet, dass**
die Vorrichtung konfiguriert ist, die akustische Strahlformung (5) in Abhängigkeit einer Geschwindigkeit des Fahrzeugs (1) und einer Bewegungsgeschwindigkeit des Passanten (2) anzupassen.

2. Vorrichtung nach Anspruch 1, **dadurch gekennzeichnet, dass** die sensorische Einrichtung (3) zum Erfassen von Passanten mindestens eine Kamera aufweist.

3. Vorrichtung nach einem der Ansprüche 1 oder 2, **dadurch gekennzeichnet, dass** die sensorische Einrichtung (3) zum Erfassen von Passanten (2), zum Bestimmen von Positionsdaten eines Passanten (2) oder einer Gruppe von Passanten (2) in Bezug auf das Fahrzeug (1) ausgebildet ist.

4. Vorrichtung nach einem der Ansprüche 1 bis 3, **dadurch gekennzeichnet, dass** die akustische Strahlformung (5) auf Basis von erfassten Positionsdaten eines Passanten (2) dynamisch fokussierbar ist.

5. Vorrichtung nach einem der Ansprüche 1 bis 4, **dadurch gekennzeichnet, dass** das mit mehreren Lautsprechern und mehreren Mikrofonen gebildete Array (4) zumindest im Frontbereich des Fahrzeugs (1) angeordnet ist.

6. Vorrichtung nach einem der Ansprüche 1 bis 5, **dadurch gekennzeichnet, dass** das mit mehreren Lautsprechern und mehreren Mikrofonen gebildete Array (4) zum Ausblenden von Umgebungsgeräuschen außerhalb eines um die Position des Passanten (2) fokussierten Bereichs der akustischen Strahlformung (5) ausgebildet ist.

7. Vorrichtung nach einem der Ansprüche 1 bis 6, **dadurch gekennzeichnet, dass** die auf Basis einer erkannten Passantengeste und/oder eines erkannten akustischen Signals des Passanten (2) ausgelöste Aktion zusätzlich eine weitere Aktion umfasst, wobei die weitere Aktion ausgewählt ist aus einer Gruppe von Aktionen, die eine Benachrichtigung eines Insassen des Fahrzeugs (1), ein Anhalten des Fahrzeugs (1), ein Bremsen des Fahrzeugs (1), ein Beschleunigen des Fahrzeugs (1), ein Ausweichmanöver des Fahrzeugs (1), ein Verlassen eines autonomen Betriebsmodus des Fahrzeugs (1) und ein Abschalten des Fahrzeugs (1) umfasst.

8. Verfahren für Fahrzeuge (1), insbesondere für autonome Fahrzeuge (1), zum Bereitstellen einer bidirektionalen Kommunikation zwischen dem Fahrzeug (1) und mindestens einem Passanten (2) umfassend die Schritte:
sensorisches Erfassen der Fahrzeugumgebung des Fahrzeugs (1);
Fokussieren einer vom Fahrzeug (1) ausgehenden akustische Strahlformung (5) zum Senden von akustischen Signalen an den Passanten (2) und zum Empfangen von akustischen Signalen von dem Passanten (2) in einem vorgegebenen Bereich um die Position des Passanten (2), wenn ein Passant (2) in einer vorgegebenen Entfernung zum Fahrzeug (1) erfasst wird;
Erfassen einer Geste und/ oder ein akustisches Signal des Passanten (2);
Interpretieren der erfassten Geste und/oder des erfassten akustischen Signals des Passanten (2),
wobei die Interpretation eine Zuordnung der erkannten Gesten und/oder der erkannten akustischen Informationen des Passanten (2) zu einer bestimmten Aktion des Fahrzeugs umfasst;
Auslösen einer Aktion des Fahrzeugs (1), wenn eine Geste und/oder ein akustisches Signal des Passanten (2) erkannt wird,
wobei die Aktion des Fahrzeugs (1) zumindest eine Wiedergabe eines akustischen Signals an den Passanten (2) und/oder ein Empfangen eines visuellen und/oder akustischen Signals von dem Passanten (2) umfasst
**gekennzeichnet durch** den Schritt:
Anpassen der akustischen Strahlformung (5) in Abhängigkeit einer Geschwindigkeit des Fahrzeugs (1) und einer Bewegungsgeschwindigkeit des Passanten (2).

9. Verfahren nach Anspruch 8, **dadurch gekennzeichnet, dass** die Position eines Passanten (2) mit mindestens einer Kamera (3) erfasst wird.

10. Verfahren nach einem der Ansprüche 8 oder 9, **dadurch gekennzeichnet, dass** die akustische Strahlformung (5) zur Übertragung akustischer Signale in einem vorgegebenen Bereich um die Position des Passanten (2) auf Basis von erfassten Positionsdaten des Passanten (2) dynamisch fokussiert wird.

11. Verfahren nach einem der Ansprüche 8 bis 10, **dadurch gekennzeichnet, dass** während und/oder nach einer Aktion des Fahrzeugs (1) ein akustisches Signal des Passanten (2) und/ oder eine Geste des Passanten (2) erfasst wird/ werden.

12. Verfahren nach einem der Ansprüche 8 bis 11, **dadurch gekennzeichnet, dass** Umgebungsgeräusche außerhalb eines um die Position des Passanten (2) fokussierten Bereichs der akustischen Strahlformung (5) ausgeblendet werden.

13. Verfahren nach einem der Ansprüche 8 bis 12, **dadurch gekennzeichnet, dass** beim Erkennen einer Geste und/oder eines akustischen Signals des Passanten (2) zusätzlich eine weitere Aktion des Fahrzeugs (1) ausgelöst wird, wobei die weitere Aktion ausgewählt ist aus einer Gruppe von Aktionen, die eine Benachrichtigung eines Insassen des Fahrzeugs (1), ein Anhalten des Fahrzeugs (1), ein Bremsen des Fahrzeugs (1), ein Beschleunigen des Fahrzeugs (1), ein Ausweichmanöver des Fahrzeugs (1), ein Verlassen eines autonomen Betriebsmodus des Fahrzeugs (1) und ein Abschalten des Fahrzeugs (1) umfasst.

## Claims

1. A device for a vehicle (1), in particular an autonomous vehicle (1), for providing bidirectional communication between the vehicle (1) and at least one passer-by (2), comprising:
a sensory device (3) for detecting passers-by (2) in an environment of the vehicle (1)
an array (4) arranged on the vehicle (1) and comprising a plurality of loudspeakers and a plurality of microphones for providing acoustic beamforming (5) focused in a predetermined area around the position of a detected passer-by (2) for transmitting acoustic signals to the passer-by (2) and for receiving acoustic signals from the passer-by (2); and
a computer-based recognition device for recognizing and interpreting passer-by gestures and/or acoustic signals of the passer-by (2), wherein:
the interpretation comprises an association of the recognized gestures and/or the recognized acoustic signals of the passer-by (2) with a specific action of the vehicle;
the computer-based detection device is coupled with the sensory device (3) and the array (4);
the computer-based recognition device is also designed to execute an action of the vehicle (1) on the basis of a recognized passer-by gesture and/or a recognized acoustic signal of the passer-by (2) and its interpretation,
the action of the vehicle (1) comprises at least a reproduction of an acoustic signal to the passer-by (2) and/or a reception of a visual and/or acoustic signal from the passer-by (2),
**characterized in that**
the device is configured to adapt the acoustic beamforming (5) as a function of a speed of the vehicle (1) and a speed of movement of the passer-by (2).

2. The device according to claim 1, **characterized in that** the sensory device (3) for detecting passers-by has at least one camera.

3. The device according to any one of claims 1 or 2, **characterized in that** the sensory device (3) is designed to detect passers-by (2), to determine position data of a passer-by (2) or a group of passers-by (2) in relation to the vehicle (1).

4. The device according to any one of claims 1 to 3, **characterized in that** the acoustic beamforming (5) can be dynamically focused on the basis of detected position data of a passer-by (2).

5. The device according to any one of claims 1 to 4, **characterized in that** the array (4) formed with a plurality of loudspeakers and a plurality of microphones is arranged at least in the front area of the vehicle (1).

6. The device according to any one of claims 1 to 5, **characterized in that** the array (4) formed with a plurality of loudspeakers and a plurality of microphones is designed to suppress ambient noise outside an area of acoustic beamforming (5) focused around the position of the passer-by (2).

7. The device according to any one of claims 1 to 6, **characterized in that** the action triggered on the basis of a detected passer-by gesture and/or a detected acoustic signal of the passer-by (2) additionally comprises a further action, wherein the further action is selected from a group of actions, which comprises notifying an occupant of the vehicle (1), stopping the vehicle (1), braking the vehicle (1), accelerating the vehicle (1), an evasive maneuver of the vehicle (1), exiting an autonomous operating mode of the vehicle (1) and switching off the vehicle (1).

8. A method for vehicles (1), in particular for autonomous vehicles (1), for providing bidirectional communication between the vehicle (1) and at least one passer-by (2), comprising the steps:
sensory detection of the vehicle's environment (1);
focusing an acoustic beamforming (5) emitted from the vehicle (1) for transmitting acoustic signals to the passer-by (2) and for receiving acoustic signals from the passer-by (2) in a predetermined area around the position of the passer-by (2) when a passer-by (2) is detected at a predetermined distance from the vehicle (1);
detecting a gesture and/or an acoustic signal from the passer-by (2);
interpreting the detected gesture and/or the detected acoustic signal of the passer-by (2),
wherein the interpretation comprises an association of the recognized gestures and/or the recognized acoustic information of the passer-by (2) with a specific action of the vehicle;
triggering an action of the vehicle (1) when a gesture and/or an acoustic signal from the passer-by (2) is recognized,
wherein the action of the vehicle (1) comprises at least a reproduction of an acoustic signal to the passer-by (2) and/or a reception of a visual and/or acoustic signal from the passer-by (2)
**characterized by** the step:
adapting the acoustic beamforming (5) as a function of a speed of the vehicle (1) and a speed of movement of the passer-by (2).

9. The method according to claim 8, **characterized in that** the position of a passer-by (2) is detected by at least one camera (3) .

10. The method according to any one of claims 8 or 9, **characterized in that** the acoustic beamforming (5) for transmitting acoustic signals in a predetermined area around the position of the passer-by (2) is dynamically focused on the basis of detected position data of the passer-by (2).

11. The method according to any one of claims 8 to 10, **characterized in that** an acoustic signal of the passer-by (2) and/or a gesture of the passer-by (2) is/are detected during and/or after an action of the vehicle (1).

12. The method according to any one of claims 8 to 11, **characterized in that** ambient noise outside a region of the acoustic beamforming (5) focused around the position of the passer-by (2) is masked out.

13. The method according to any one of claims 8 to 12, **characterized in that** when a gesture and/or an acoustic signal of the passer-by (2) is detected, a further action of the vehicle (1) is additionally triggered, wherein the further action is selected from a group of actions, which comprises notifying an occupant of the vehicle (1), stopping the vehicle (1), braking the vehicle (1), accelerating the vehicle (1), an evasive maneuver of the vehicle (1), exiting an autonomous operating mode of the vehicle (1) and switching off the vehicle (1).

## Revendications

1. Dispositif pour un véhicule (1), en particulier un véhicule autonome (1), destiné à assurer une communication bidirectionnelle entre le véhicule (1) et au moins un passant (2), comprenant :
un dispositif sensoriel (3) pour détecter des passants (2) dans un environnement du véhicule (1)
un réseau (4) disposé sur le véhicule (1) et composé de plusieurs haut-parleurs et de plusieurs microphones pour fournir une formation de faisceau acoustique (5) focalisée dans une zone prédéterminée autour de la position d'un passant détecté (2) afin d'envoyer des signaux acoustiques au passant (2) et recevoir des signaux acoustiques du passant (2) ; et
un dispositif de détection informatique pour détecter et interpréter des gestes du passant et/ou des signaux acoustiques du passant (2), dans lequel :
l'interprétation implique une association des gestes et/ou des signaux acoustiques détectés du passant (2) à une action particulière du véhicule ;
le dispositif de détection informatique est couplé au dispositif sensoriel (3) et au réseau (4) ;
le dispositif de détection informatique est également conçu pour exécuter une action du véhicule (1) sur la base d'un geste détecté du passant et/ou d'un signal acoustique détecté du passant (2) et de leur interprétation,
l'action du véhicule (1) comprend au moins la reproduction d'un signal acoustique destiné au passant (2) et/ou la réception d'un signal visuel et/ou acoustique en provenance du passant (2),
**caractérisé en ce que**
le dispositif est configuré pour adapter la formation de faisceau acoustique (5) en fonction d'une vitesse du véhicule (1) et d'une vitesse de déplacement du passant (2).

2. Dispositif selon la revendication 1, **caractérisé en ce que** le dispositif sensoriel (3) pour détecter des passants comporte au moins une caméra.

3. Dispositif selon l'une des revendications 1 ou 2, **caractérisé en ce que** le dispositif sensoriel (3) est conçu pour détecter des passants (2), afin de déterminer des données de position d'un passant (2) ou d'un groupe de passants (2) par rapport au véhicule (1).

4. Dispositif selon l'une des revendications 1 à 3, **caractérisé en ce que** la formation de faisceau acoustique (5) peut être focalisée dynamiquement sur la base de données de position détectées d'un passant (2).

5. Dispositif selon l'une des revendications 1 à 4, **caractérisé en ce que** le réseau (4) formé de plusieurs haut-parleurs et de plusieurs microphones est disposé au moins dans la zone frontale du véhicule (1).

6. Dispositif selon l'une des revendications 1 à 5, **caractérisé en ce que** le réseau (4) formé de plusieurs haut-parleurs et de plusieurs microphones est conçu pour masquer des bruits ambiants à l'extérieur d'une zone de la formation de faisceau acoustique (5) focalisée autour de la position du passant (2).

7. Dispositif selon l'une des revendications 1 à 6, **caractérisé en ce que** l'action déclenchée sur la base d'un geste détecté du passant et/ou d'un signal acoustique détecté du passant (2) comprend également une autre action, dans lequel l'autre action est sélectionnée dans un groupe d'actions comprenant une notification d'un occupant du véhicule (1), un l'arrêt du véhicule (1), le freinage du véhicule (1), l'accélération du véhicule (1), une manœuvre d'évitement du véhicule (1), la sortie d'un mode de fonctionnement autonome du véhicule (1) et la mise hors tension du véhicule (1).

8. Procédé pour véhicules (1), en particulier pour véhicules autonomes (1), destiné à assurer une communication bidirectionnelle entre le véhicule (1) et au moins un passant (2), comprenant les étapes suivantes :
détection sensorielle de l'environnement du véhicule (1) ;
focalisation d'une formation de faisceau acoustique (5) à partir du véhicule (1) pour envoyer des signaux acoustiques au passant (2) et pour recevoir des signaux acoustiques du passant (2) dans une zone prédéterminée autour de la position du passant (2) lorsqu'un passant (2) est détecté à une distance prédéterminée du véhicule (1) ;
détection d'un geste et/ou d'un signal acoustique du passant (2) ;
interprétation du geste et/ou du signal acoustique détecté du passant (2),
dans lequel l'interprétation comprend une association des gestes et/ou des informations acoustiques détectés du passant (2) à une action particulière du véhicule ;
déclenchement d'une action du véhicule (1) lorsqu'un geste et/ou un signal acoustique du passant (2) est détecté,
dans lequel l'action du véhicule (1) comprend au moins la reproduction d'un signal acoustique destiné au passant (2) et/ou la réception d'un signal visuel et/ou acoustique en provenance du passant (2),
**caractérisé par** l'étape suivante :
adaptation de la formation de faisceau acoustique (5) en fonction d'une vitesse du véhicule (1) et d'une vitesse de déplacement du passant (2).

9. Procédé selon la revendication 8, **caractérisé en ce que** la position d'un passant (2) est détectée par au moins une caméra (3).

10. Procédé selon l'une des revendications 8 ou 9, **caractérisé en ce que** la formation de faisceau acoustique (5) est focalisée dynamiquement pour la transmission de signaux acoustiques dans une zone prédéterminée autour de la position du passant (2) sur la base de données de position détectées du passant (2).

11. Procédé selon l'une des revendications 8 à 10, **caractérisé en ce que** pendant et/ou après une action du véhicule (1), un signal acoustique du passant (2) et/ou un geste du passant (2) sont détectés.

12. Procédé selon l'une des revendications 8 à 11, **caractérisé en ce que** des bruits ambiants sont masqués à l'extérieur d'une zone de la formation de faisceau acoustique (5) focalisée autour de la position du passant (2).

13. Procédé selon l'une des revendications 8 à 12, **caractérisé en ce qu'**une autre action du véhicule (1) est également déclenchée lors de la détection d'un geste et/ou d'un signal acoustique du passant (2), dans lequel l'autre action est sélectionnée dans un groupe d'actions comprenant une notification d'un occupant du véhicule (1), l'arrêt du véhicule (1), le freinage du véhicule (1), l'accélération du véhicule (1), une manœuvre d'évitement du véhicule (1), la sortie d'un mode de fonctionnement autonome du véhicule (1) et la mise hors tension du véhicule (1).
